(19) Europäisches Patentamt
European Patent Office
Office européen des brevets

(11) EP 3 640 954 A1

(12) EUROPEAN PATENT APPLICATION

(43) Date of publication:
**22.04.2020 Bulletin 2020/17**

(21) Application number: **18200491.1**

(22) Date of filing: **15.10.2018**

(51) Int Cl.:
***H01B 3/42*** *(2006.01)* ***C08L 69/00*** *(2006.01)*
***C08L 83/10*** *(2006.01)* ***C08L 83/04*** *(2006.01)*
*C08K 3/22 (2006.01)* *C08K 3/32 (2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SABIC Global Technologies B.V.**
**4612 PX Bergen op Zoom (NL)**

(72) Inventors:
- **SONG, Shijie**
**Shanghai, 201319 (CN)**
- **CHENG, Yunan**
**Shanghai, 201319 (CN)**
- **WANG, Qin**
**Shanghai, 201319 (CN)**

(74) Representative: **Elzaburu S.L.P.**
**Miguel Angel 21, 2nd floor**
**28010 Madrid (ES)**

(54) **POLYCARBONATE BASED LASER DIRECT STRUCTURING COMPOUNDS WITH POST-CONSUMER RECYCLED PLASTICS**

(57) Disclosed herein are methods and compositions derived from postconsumer recycled polycarbonate with improved impact strength and comparable plating performance. The composition comprises from about 25 wt. % to about 75 wt. % of a recycled polycarbonate; from about 15 wt. % to about 65 wt. % of at least one virgin polycarbonate; from about 1 wt. % to about 10 wt. % of a laser direct structuring additive; from about 0.01 wt. % to about 40 wt. % of a polycarbonate-polysiloxane copolymer; and from about 0.1 wt. % to about 2 wt. % of a silicone based additive. The combined weight percent value of all components does not exceed 100 wt. %, and all weight percent values are based on the total weight of the composition.

EP 3 640 954 A1

## Description

TECHNICAL FIELD

The disclosure concerns laser direct structuring compositions formed from post-consumer recycled plastics.

BACKGROUND

Demand for laser direct structuring (LDS) compositions has grown as these materials are very desirable for use in the consumer electronics market. Polycarbonate (PC) has proved to be an ideal structural material used in electronic devices. Recycling of materials has become increasingly desirable for sustainable use without detrimental environmental impact. However, postconsumer recycled polycarbonates may suffer from certain shortcomings. For example, post-consumer recycled PC may derivatives suffer from substantial reduction in melt stability during melt processing such as extrusion and molding. Accordingly, it would be beneficial to provide thermoplastic polymer blends compositions, which include polycarbonates or polycarbonate derivatives and further comprise post-consumer recycled plastic

SUMMARY

The disclosure relates to a composition comprising: from about 25 wt. % to about 75 wt. % of a recycled polycarbonate; from about 15 wt. % to about 65 wt. % of at least one virgin polycarbonate; from about 1 wt. % to about 10 wt. % of a laser direct structuring additive; from about 0.01 wt. % to about 40 wt. % of a polycarbonate-polysiloxane copolymer; and from about 0.1 wt. % to about 2 wt. % of a silicone based additive. The combined weight percent value of all components does not exceed 100 wt. %, and all weight percent values are based on the total weight of the composition. The composition may exhibit a notched Izod impact strength within about 10 percent of the notched Izod impact strength of a substantially similar composition comprising at least one virgin polycarbonate and in the absence of the recycled polycarbonate and the silicone based additive. The composition may further exhibit a plating index of greater than 0.8 when tested using X-ray fluorescence.

The disclosure also relates methods of forming the disclosed compositions as well as articles formed therefrom.

DETAILED DESCRIPTION OF ILLUSTRATIVE EMBODIMENTS

Manufacturers in various industries, including the consumer electronics market, desire greater sustainability in their products to meet growing environmental concerns. Post-consumer recycled (PCR) plastics represent an alternative approach to manufacturing. However, it may be challenging to replace virgin polymer resin with recycled resin without sacrificing certain performance properties. LDS compositions which are often used in electronic devices desirably maintain both laser plating performance as well as mechanical performance. Compositions of the present disclosure may address the loss of mechanical performance such as low notch impact, while maintaining laser plating performance. The disclosed compositions combine PCR resins, LDS additives, and a silicon based additive to provide laser plating and mechanical performance at least comparable to conventional virgin resin based compositions. In certain aspects, the compositions may comprise up to about 75 wt. % PCR resin. These compositions may exhibit improved notched Izod impact performance when compared to conventional PCR based resins, or PCR based resins in the absence of the silicon based additive.

The present disclosure provides a polycarbonate composition comprising LDS additives and about 50 % post-consumer recycled polycarbonate that exhibits mechanical and physical performance comparable to virgin polycarbonate with LDS additives. Specifically, functionalized silicon based additives are introduced to the post-consumer recycled polycarbonate and LDS composition which may allow the disclosed compositions to perform comparably to virgin polycarbonate LDS compositions with respect to certain mechanical and physical properties including, but not limited to, notched Izod impact strength and plating index.

Disclosed herein are LDS compositions derived from post-consumer recycled polycarbonates. The compositions may comprise from about 25 wt. % to about 75 wt. % of a recycled polycarbonate, from about 15 wt. % to about 65 wt. % of at least one virgin polycarbonate; from about 1 wt. % to about 10 wt. % of a laser direct structuring additive; from about 0.01 wt. % to about 40 wt. % of a polycarbonate-polysiloxane copolymer; and from about 0.1 wt. % to about 2 wt. % of a silicone based additive. The combined weight percent value of all components does not exceed 100 wt. %, and all weight percent values are based on the total weight of the composition. The composition may also exhibit a notched Izod impact strength within about 10 percent of the notched Izod impact strength of a substantially similar composition comprising at least one virgin polycarbonate and in the absence of the recycled polycarbonate and the silicone based additive. The composition may further exhibit a plating index of greater than 0.8 when tested using X-ray

fluorescence.

The compositions described herein are particularly useful in connection with laser direct structuring (LDS) technology, providing plating performance while exhibiting relatively good mechanical properties. The disclosed thermoplastic compositions generally comprise a blend of virgin and recycled polycarbonate, and at least one laser direct structuring additive, as well as a polycarbonate copolymer and a silicone based additive. The compositions may further comprise one or more additional additives. The disclosed thermoplastic compositions may exhibit plating performance, as well as, comparable mechanical and physical properties when compared to a substantially similar composition comprising at least one virgin polycarbonate and in the absence of the recycled polycarbonate and the silicone based additive.

The present disclosure can be understood more readily by reference to the detailed description, examples, drawings, and claims described herein. It is to be understood that this disclosure is not limited to the specific thermoplastic compositions, articles, devices, systems, and/or methods disclosed unless otherwise specified, as such can, of course, vary. It is also to be understood that the terminology used herein is for the purpose of describing particular aspects only and is not intended to be limiting. Those of ordinary skill in the relevant art will recognize and appreciate that changes and modifications can be made to the various aspects of the disclosure described herein, while still obtaining the beneficial results of the present disclosure. It will also be apparent that some of the desired benefits of the present disclosure can be obtained by selecting some of the features of the present disclosure without utilizing other features. The present description is provided as illustrative of the principles of the disclosure and not in limitation thereof. Various combinations of elements of this disclosure are encompassed by this disclosure, e.g., combinations of elements from dependent claims that depend upon the same independent claim.

## POLYCARBONATE

The disclosed compositions may comprise a recycled polycarbonate and at least one virgin polycarbonate. In one aspect, a polycarbonate can include any polycarbonate material or mixture of materials, for example, as recited in U.S. Patent No. 7,786,246, which is hereby incorporated in its entirety for the specific purpose of disclosing various polycarbonate compositions and methods. The term polycarbonate can be further defined as compositions having repeating structural units of the formula (1):

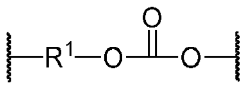 (1),

in which at least 60 percent of the total number of $R^1$ groups are aromatic organic radicals and the balance thereof are aliphatic, alicyclic, or aromatic radicals. In a further aspect, each $R^1$ is an aromatic organic radical and, more preferably, a radical of the formula (2):

$$-A^1-Y^1-A^2- \quad (2),$$

wherein each of $A^1$ and $A^2$ is a monocyclic divalent aryl radical and $Y^1$ is a bridging radical having one or two atoms that separate $A^1$ from $A^2$. In various aspects, one atom separates $A^1$ from $A^2$. For example, radicals of this type include, but are not limited to, radicals such as -O-, -S-, -S(O)-, $-S(O_2)-$, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical $Y^1$ is preferably a hydrocarbon group or a saturated hydrocarbon group such as methylene, cyclohexylidene, or isopropylidene.

In various further aspects, "polycarbonates" and "polycarbonate resins" as used herein further include homopolycarbonates, copolymers including different $R^1$ moieties in the carbonate (referred to herein as "copolycarbonates"), copolymers including carbonate units and other types of polymer units, such as ester units, polysiloxane units, and combinations including at least one of homopolycarbonates and copolycarbonates. As used herein, "combination" is inclusive of blends, mixtures, alloys, reaction products, and the like.

In some aspects, the polycarbonate polymer is a homopolymer. For example, the polycarbonate homopolymer may comprise repeating units derived from bisphenol A.

In a still further aspect, the polycarbonate component is a copolymer. In a still further aspect, the copolymer includes repeating units derived from BPA. In yet a further aspect, the copolymer includes repeating units derived from sebacic acid. In an even further aspect, the copolymer includes repeating units derived from sebacic acid and BPA. Useful polycarbonate copolymers are commercially available and include, but are not limited to, those marketed under the trade names LEXAN™ EXL and LEXAN™ HFD polymers, and are available from SABIC.

In certain examples, the polycarbonate polymer is a Bisphenol-A polycarbonate, a high molecular weight (Mw)

high flow/ductile (HFD) polycarbonate, a low Mw HFD polycarbonate, or a combination thereof.

The flow/ductile polycarbonate may comprise a polycarbonate that provides very high flow (e.g., about 40% greater than a conventional polycarbonate), while maintaining the toughness and ductility for flowability that is typical in conventional polycarbonate.

An exemplary Bisphenol-A polycarbonate suitable for use in aspects of the disclosure includes, but is not limited to, a PC Copolymer (various grades of which are available from SABIC), which includes repeating units derived from BPA and repeating units derived from sebacic acid. In a further aspect, the polycarbonate polymer may be a Bisphenol-A polycarbonate homopolymer, or a blend of the PC copolymer and the Bisphenol-A polycarbonate homopolymer.

As used herein, "high molecular weight" refers to a molecular weight (Mw) of about 58,000 to about 75,000 grams per mole (g/mol). As used herein, "low molecular weight" refers to a Mw of about 15,000 to about 58,000 (g/mol), as measured by gel permeation chromatography using BPA polycarbonate standards.

In yet further examples, a polycarbonate copolymer may comprise a polycarbonate-polysiloxane copolymer. Non-limiting examples of polycarbonate-polysiloxane copolymers may comprise various copolymers available from SABIC™. In an aspect, the polysiloxane-polycarbonate copolymer can contain 6 % by weight polysiloxane content based upon the total weight of the polysiloxane-polycarbonate copolymer. In various aspects, the 6 % by weight polysiloxane block copolymer can have a weight average molecular weight (Mw) of from about 23,000 to 24,000 Daltons using gel permeation chromatography with a bisphenol A polycarbonate absolute molecular weight standard. In certain aspects, the 6% weight siloxane polysiloxane-polycarbonate copolymer can have a melt volume flow rate (MVR) of about 10 cubic centimeters per 10 minutes ($cm^3$/ 10 min) at 300 °C /1.2 kilogram (kg) (see for example, C9030T, a 6 % by weight polysiloxane content copolymer available from SABIC as "transparent" EXL C9030T resin polymer).

In another example, the polysiloxane-polycarbonate block can comprise 20 % by weight polysiloxane based upon the total weight of the polysiloxane block copolymer. For example, an appropriate polysiloxane-polycarbonate copolymer can be a bisphenol A polysiloxane-polycarbonate copolymer endcapped with para-cumyl phenol (PCP) and having a 20 % polysiloxane content (see C9030P, commercially available from SABIC as the "opaque" EXL C9030P). In various aspects, the weight average molecular weight of the 20 % polysiloxane block copolymer can be about 29,900 Daltons to about 31,000 Daltons when tested according to a polycarbonate standard using gel permeation chromatography (GPC) on a cross-linked styrene-divinylbenzene column and calibrated to polycarbonate references using a UV-VIS detector set at 264 nanometers (nm) on 1 milligram per milliliter (mg/ml) samples eluted at a flow rate of about 1.0 ml/minute. Moreover, the 20% polysiloxane block copolymer can have an MVR at 300 °C/1.2 kg of 7 $cm^3$/ 10 min and can exhibit siloxane domains sized in a range of from about 5 micron to about 20 micrometers (microns, $\mu$m).

The polycarbonate of the present disclosure may contain endcapping agents. Any suitable endcapping agents can be used provided that such agents do not significantly adversely impact the desired properties of the polycarbonate composition (transparency, for example). Endcapping agents include mono-phenolic compounds, mono-carboxylic acid chlorides, and/or mono-chloroformates. Mono-phenolic endcapping agents are exemplified by monocyclic phenols such as phenol and $C_1$-$C_{22}$ alkyl-substituted phenols such as p-cumyl-phenol, resorcinol monobenzoate, and p- and tertiary-butyl phenol; and monoethers of diphenols, such as p-methoxyphenol. In some examples, the polycarbonate comprises paracumyl phenol endcapping.

Additionally, some polycarbonates include from about 200 to about 2000 ppm, or from about 250 to about 1800 ppm Fries products.

The disclosed composition may comprise a recycled plastic. Specifically, the composition may comprise a recycled polycarbonate derived or reclaimed from a polycarbonate as described herein. The plastic component can be reclaimed from post-consumer sources. Yet further, the plastic component can be reclaimed from post-consumer sources, including but not limited to, home appliances waste e.g. TV, air-conditioners, washing machines, refrigerators, and like. Regardless of the source, the recycled polycarbonate component may be similar or even identical to the chemical composition of a corresponding virgin polycarbonate. In one example, the polycarbonate may be derived from compact discs. In a further example, the recycled polycarbonate may be sourced from plastic bottles, such as plastic beverage bottles.

However, an important difference between the virgin polycarbonate component and recycled plastic utilized in the present compositions, is presence of at least one impurity that is not present in a virgin material. For example, one or more additives conventionally used in the manufacture of impact modified thermoplastics can be present as an impurity. Additional impurities can include processing residues such as lubricants, mold release agents, antistatic agents, stabilizers, light stabilizers, flame retardants, metals (e.g. iron, aluminum, and copper). Still further, the impurities can include polyurethane particles that cannot be fully removed during the recycling process. For the present recycled polycarbonate polymers, potential impurity content may be less than 10 ppm, less than 8 ppm, less than 5 ppm, less than 3 ppm, less than 1 ppm, less than 0.5 ppm, or less than 0.1 ppm.

The disclosed composition may comprise from about 25 wt. % to about 75 wt. % a recycled polycarbonate polymer. In particular aspects, the thermally conductive composition includes from about 25 wt. % to about 70 wt. % of a recycled polycarbonate polymer, and in further aspects the thermally conductive composition includes from about 35

wt. % to about 65 wt. % of a recycled polycarbonate polymer, or even from about 35 wt. % to about 50 wt. % of a recycled polycarbonate polymer.

A virgin polycarbonate polymer may refer to a polycarbonate polymer that is directly produced from a petrochemical feedstock, such as natural gas or crude oil, which has never been used or processed before. The disclosed composition may comprise from about 15 wt. % to about 75 wt. % of a virgin polycarbonate polymer. In particular examples, the thermally conductive composition includes from about 15 wt. % to about 65 wt. % of a virgin polycarbonate polymer, and in further aspects the thermally conductive composition includes from about 20 wt. % to about 75 wt. % a virgin polycarbonate polymer, or even from about 35 wt. % to about 50 wt. % a virgin polycarbonate polymer.

## LASER DIRECT STRUCTURING ADDITIVE

Aspects of the thermoplastic composition include a laser direct structuring (LDS) additive. In certain examples, the LDS additive includes copper chromite black, copper hydroxide phosphate, tin-antimony cassiterite grey or a combination thereof. A suitable copper chromite black LDS additive is Black 1G, available from The Shepherd Color Company. A suitable copper hydroxide phosphate is Iriotec™ 8840, available from Merck. An exemplary tin-antimony cassiterite grey is S-5000, available from Ferro.

In some aspects, the LDS additive may be present in the thermoplastic composition in an amount of from about 1 wt % to about 10 wt %. In further aspects, the LDS additive may be present in the thermoplastic composition in an amount of from about 2 wt % to about 8 wt %, or from about 3 wt % to about 6 wt %. At least one laser direct structuring additive may be present in an amount in the composition in a range having a lower boundary of about 0.5 wt. %, 1 wt. %, 2 wt. %, 3 wt. %, 4 wt. %, 5 wt. %, 6 wt. %, or 7 wt. %and an upper boundary of 10 wt. %, 9 wt. %, 8 wt. %, 7 wt. %, or 6 wt. %, *e.g.,* in a range of from 7 to 9 wt. %, from 4 to 8 wt. %, or an amount of about 7 wt. %. In further aspects, at least one laser direct structuring additive is present in an amount in the composition in a range having a lower boundary of about 0.5 wt. %, about 1 wt. %, about 2 wt. %, about 3 wt. %, about 4 wt. %, about 5 wt. %, about 6 wt. %, or about 7 wt. % and an upper boundary of about 10 wt. %, about 9 wt. %, about 8 wt. %, about 7 wt. %, or about 6 wt. %, *e.g.,* in a range of from about 7 to about 9 wt. %, from about 4 to about 8 wt. %,, or from about 5 wt. % to about 8 wt. %, is preferred.

It is believed that the LDS additive and silicon based additive (particularly a functionalized silicon based additive) contributes to the recycled polycarbonate composition having an improved plating index as compared to a recycled polycarbonate composition without an LDS additive and silicon based additive.

Plating index may be determined by a two-step process of laser etching and copper chemical deposition for 45 min according to the "LPKF Method" established by LPKF Laser & Electronics. In the first step, molded plaques of the materials to be evaluated (e.g. the thermoplastic composition) are laser etched/structured with the LPKF pattern, in which the laser variables are power, frequency and speed. Following this step, the laser structured plaque and one reference stick (material: Pocan DP 7102) are placed in the copper bath until the reference stick has a copper thickness of nearly 5 μm. The plaque and reference stick are then removed, rinsed and dried, and the copper thicknesses for the reference stick are measured twice on each side by an XRF method (in accordance with ASTM B568 (2014)) and averaged over all four points. This is noted as $X_{ref}$. Then, two points are measured for each parameter field and averaged for each field. Plating index can then be calculated as:

$$\text{Plating index} = \frac{\text{Average copper thickness for one parameter field}}{\text{Average copper thickness for reference stick } X_{ref}}$$

Thus, in some aspects, the thermoplastic composition has a plating index of at least about 0.5. In other aspects, the thermoplastic composition has a plating index of at least about 0.5, or at least about 0.55, or at least about 0.70, or at least about 0.75, or at least about 0.8, or at least about 0.85.

## SILICONE BASED ADDITIVE

The disclosed thermoplastic compositions may further comprise a silicon based additive. The silicon based additive may comprise a siloxane additive. The siloxane additive may be an oligomeric siloxane additive.

The siloxane additive can be polymeric or oligomeric in nature or, alternatively, can be monomeric or a single compound. The composition may comprise at least one siloxane additive. The at least one siloxane additive may, for example, comprise functional groups selected from amino groups, phenyl groups, and epoxy groups. Non-limiting examples of siloxane additives may include epoxysilane, aminosilane, aminosiloxane, or phenylsiloxane. In one aspect, the siloxane additive comprises an aminosiloxane. In another aspect, the siloxane additive comprises a phenyl siloxane. In various aspects, the siloxane additive is functionalized. Specifically, the siloxane additive may be functionalized with hydroxyl groups.

In various aspects, the silicon based additive comprises a polydimethylsiloxane functionalized with hydroxyl endgroups. For example, the silicon based additive may comprise polydimethylsiloxane with hydroxyl endgroups shown as Structure A below and commercially available from Momentive as SF-1023.

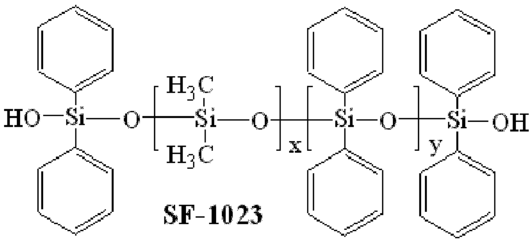

SF-1023

Structure A

As a further example, the silicon based additive comprises a linear and low-crosslink combined PDMS with hydroxyl groups as end groups as shown in structure B and commercially available from Momentive as SFR-100.

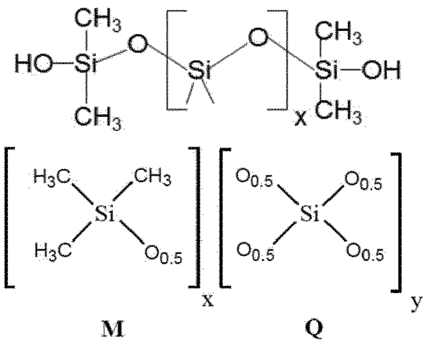

M Q

Structure B

The composition may comprise a silicon based additive in an amount of from about 0.1 wt. % to about 5 wt. %. In some examples, the silicon based additive may be present in an amount of from about 0.01 wt. % to about 3 wt. %, 0.01 wt. % to about 2 wt. %, 0.01 wt. % to about 1.5 wt. %, 0.01 wt. % to about 1.2 wt. %.

**FLAME RETARDANT ADDITIVE**

In some aspects, the disclosed compositions may comprise a flame retardant additive. The flame retardant additive may comprise a flame retardant material or mixture of flame retardant materials suitable for use in the inventive thermoplastic compositions. More specifically, the composition may comprise a non-bromine flame retardant additive. The flame retardant additive may be free of, or substantially free of, halogen, such as bromine. In various embodiments, the thermoplastic resin can comprise from about 0.01 wt. % to about 1 wt. % of a non-bromine flame retardant additive.

In an aspect, the flame retardant additive can comprise an alkali metal salt. For example, the flame retardant additive may comprise an alkali metal salt of perfluorinated alkyl sulfonates. The flame retardant may comprise an alkali metal salt of perfluorinated C1-C16 alkyl sulfonates such as potassium perfluorobutane sulfonate (Rimar salt), potassium perfluoroctane sulfonate, tetraethylammonium perfluorohexane sulfonate, potassium diphenylsulfone sulfonate (KSS), and the like, sodium benzene sulfonate, sodium toluene sulfonate (NATS) and the like; and salts formed by reacting for example an alkali metal or alkaline earth metal (for example lithium, sodium, potassium, magnesium, calcium and barium salts) and an inorganic acid complex salt, for example, an oxo-anion, such as alkali metal and alkaline-earth metal salts of carbonic acid, such as $Na_2CO_3$, $K_2CO_3$, $MgCO_3$, $CaCO_3$, and $BaCO_3$ or fluoro-anion complex such as $Li_3AlF_6$, $BaSiF_6$, $KBF_4$, $K_3AlF_6$, $KAlF_4$, $K_2SiF_6$, and/or $Na_3AlF_6$ or the like. Rimar salt and KSS and NATS, alone or in combination with other flame retardants, are particularly useful in the compositions disclosed herein. In an aspect, the thermoplastic resin can comprise from about 0.01 wt. % to about 1 wt. % of potassium perfluorobutane sulfonate, Rimar salt.

In further aspects, the flame retardant does not contain a halogen such as bromine or chlorine, and can comprise phosphorous. Non-brominated and non-chlorinated phosphorus-containing flame retardants can include, for example, organic phosphates and organic compounds containing phosphorus-nitrogen bonds. Exemplary di- or polyfunctional

aromatic phosphorus-containing compounds include resorcinol tetraphenyl diphosphate (RDP), the bis(diphenyl) phosphate of hydroquinone and the bis(diphenyl) phosphate of bisphenol-A, respectively, their oligomeric and polymeric counterparts, and the like. Other exemplary phosphorus-containing flame retardant additives include phosphonitrilic chloride, phosphorus ester amides, phosphoric acid amides, phosphonic acid amides, phosphinic acid amides, tris(aziridinyl) phosphine oxide, polyorganophosphazenes (such as phenoxycyclophosphazene), and polyorganophosphonates. In various aspects, the composition can comprise from about 0.01 wt. % to about 10 wt. % of a phosphorous containing flame retardant.

The composition may comprise a flame retardant additive as described herein in an amount of from about 0.01 wt. % to about 10 wt. %. In some examples, the flame retardant additive may be present in an amount of from about 0.01 wt. % to about 1 wt. %, 0.01 wt. % to about 1.5 wt. %, 0.01 wt. % to about 3 wt. %, 0.01 wt. % to about 5 wt. %, 0.01 wt. % to about 8 wt. %. 0.1 wt. % to about 1 wt. %, 2 wt. % to about 10 wt. %, or from about 2 wt. % to about 6 wt. %.

**OTHER ADDITIVES**

The disclosed compositions can optionally comprise one or more additives conventionally used in the manufacture of molded thermoplastic parts with the proviso that the optional additives do not adversely affect the desired properties of the resulting composition. Mixtures of optional additives can also be used. Such additives may be mixed at a suitable time during the mixing of the components for forming the composite mixture. For example, the disclosed thermoplastic compositions can comprise one or more fillers, plasticizers, stabilizers, anti-static agents, flame-retardants, impact modifiers, colorant, antioxidant, and/or mold release agents. In one aspect, the composition further comprises one or more optional additives selected from an antioxidant, flame retardant, inorganic filler, and stabilizer.

Exemplary heat stabilizers include, for example, organo phosphites; phosphonates; phosphates, or combinations including at least one of the foregoing heat stabilizers. Heat stabilizers are generally used in amounts of from 0.01 to 0.5 parts by weight based on 100 parts by weight of the total composition, excluding any filler.

Exemplary antioxidants include, for example, organophosphites; alkylated monophenols or polyphenols; alkylated reaction products of polyphenols with dienes; butylated reaction products of para-cresol or dicyclopentadiene; alkylated hydroquinones; hydroxylated thiodiphenyl ethers; alkylidene-bisphenols; benzyl compounds; amides or esters of beta-(3,5-di-tert-butyl-4-hydroxyphenyl)-propionic acid; esters of beta-(5-tert-butyl-4-hydroxy-3-methylphenyl)-propionic acid with monohydric or polyhydric alcohols; esters of thioalkyl or thioaryl compounds; or combinations including at least one of the foregoing antioxidants. Antioxidants are generally used in amounts of from 0.01 to 0.5 parts by weight, based on 100 parts by weight of the total composition, excluding any filler.

The disclosed thermoplastic compositions can further comprise an optional filler, such as, for example, an inorganic filler or reinforcing agent. The specific composition of filler, if present, can vary, provided that the filler is chemically compatible with the remaining components of the thermoplastic composition. In one aspect, the thermoplastic composition comprises a mineral filler such as talc.

In another aspect, an exemplary filler can comprise metal silicates and silica powders; boron-containing oxides of aluminum (Al), magnesium (Mg), or titanium (Ti); anhydrous or hydrated calcium sulfate; wollastonite; hollow and/or solid glass spheres; kaolin; single crystal metallic or inorganic fibers or "whiskers"; glass or carbon fibers (including continuous and chopped fibers, including flat glass fibers) ; sulfides of molybdenum (Mo) or zinc (Zn); barium compounds; metals and metal oxides; flaked fillers; fibrous fillers; short inorganic fibers reinforcing organic fibrous fillers formed from organic polymers capable of forming fibers (e.g., polyether ether ketone (PEEK), polyetherimide (PEI), polytetrafluoroethylene (PTFE), polyphenylene sulfide (PPS)); and fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents.

Exemplary light stabilizers include, for example, benzotriazoles, 2-(2-hydroxy-5-tert-octylphenyl)-benzotriazole and 2-hydroxy-4-n-octoxy benzophenone or a combination thereof. Light stabilizers are generally used in amounts of from 0.1 to 1.0 parts by weight (pbw) or about 0.1 pbw to about 1.0 pbw, based on 100 parts by weight of the total composition, excluding any filler.

Exemplary plasticizers include, for example, phthalic acid esters such as dioctyl-4,5-epoxy-hexahydrophthalate, tris-(octoxycarbonylethyl)isocyanurate, tristearin, epoxidized soybean oil or the like, or combinations including at least one of the foregoing plasticizers. Plasticizers are generally used in amounts of from 0.5 to 3.0 parts by weight, or from about 0.5 pbw to about 3 pbw, based on 100 parts by weight of the total composition, excluding any filler.

Exemplary antistatic agents include, for example, glycerol monostearate, sodium stearyl sulfonate, sodium dodecylbenzenesulfonate or the like, or combinations of the foregoing antistatic agents. In one aspect, carbon fibers, carbon nanofibers, carbon nanotubes, carbon black, or any combination of the foregoing may be used in a polymeric resin containing chemical antistatic agents to render the composition electrostatically dissipative.

Exemplary mold releasing agents or lubricants include for example stearates (including metal or alkyl stearates) or waxes. When used, mold releasing agents are generally used in amounts of from 0.1 to 1.0 parts by weight (or from

about 0.1 pbw to about 1 pbw), or from 0.1 to 5 parts by weight (or from about 0.1 pbw to about 5 pbw) based on 100 parts by weight of the total composition, excluding any filler.

**Properties**

The disclosed compositions combine virgin polycarbonate, PCR resins, LDS additives, and a silicon based additive to provide laser plating and mechanical performance at least comparable to conventional virgin resin based compositions. The compositions may exhibit comparable performance amounts of up to about 75 wt. % PCR resin. In various examples, the compositions may exhibit improved notched Izod impact performance when compared to conventional PCR based resins, or PCR based resins in the absence of the hydroxyl group silicon based additive.

In some examples, the disclosed compositions comprising LDS additives and about 50 % post-consumer recycled polycarbonate in the presence of a silicon additive may exhibit mechanical and physical performance comparable to virgin polycarbonate with LDS additives in the absence of the silicon additive. Specifically, functionalized silicon based additives are introduced to the post-consumer recycled polycarbonate and LDS composition. The presence of hydroxyl end-group functionalized organosiloxane may allow the disclosed compositions to perform comparably to virgin polycarbonate LDS compositions with respect to certain mechanical and physical properties including, but not limited to, notched Izod impact strength and plating index. The composition may exhibit a plating index of greater than 0.8 when tested using X-ray fluorescence.

**Methods of Manufacture**

In one aspect, the method comprises forming a molded part from the formed blend composition. In another aspect, the method further comprises subjecting the molded part to a laser direct structuring process.

In another aspect, the method involves three steps: 1) injection molding, 2) laser structuring, and optionally 3) metallizing the laser structured composition.

In a further aspect, during the injection molding step, the laser direct structuring additive may be mixed with the polycarbonate polymer. In another aspect, the blend composition further comprises one or more optional additives selected from an antioxidant, flame retardant, inorganic filler, and stabilizer. In a still further aspect, single shot injection molding can be used to produce the parts or articles to be laser structured. In at least one aspect, the thermoplastic composition may be mixed at this step and used in the LDS process. In another aspect, additional ingredients may be added to the thermoplastic composition after this step.

The polycarbonate thermoplastic compositions can be manufactured by various methods known in the art. For example, powdered polycarbonate, and other optional components are first blended, optionally with any fillers, in a high speed mixer or by hand mixing. The blend is then fed into the throat of a twin-screw extruder via a hopper. Alternatively, at least one of the components can be incorporated into the composition by feeding it directly into the extruder at the throat and/or downstream through a sidestuffer, or by being compounded into a master batch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming.

In a further aspect, during the laser structuring step, a laser is used to form a conductive path during the laser structuring step. The laser structuring step may comprise laser direct structuring or laser etching. In a further aspect, laser etching is carried out to provide an activated surface. In a further aspect, at least one laser beam draws at least one pattern on the surface of the thermoplastic composition during the laser structuring step. In another aspect, the employed thermoplastic composition may release at least one metallic nucleus. The at least one metallic nucleus that has been released may act as a catalyst for reductive copper plating process.

The laser etching is carried out at 1 Watt (W) to 10 W, or from about 1 Watt to about 10 Watt, power with (a) a frequency from 30 kilohertz (kHz) to 110 kHz, or from about 30 kHz to about 110 kHz, and a speed of 1 meters per second (m/s) to 5 m/s, or from about 1 m/s to about 5 m/s; or (b) a frequency from 40 kHz to 100 kHz, or from about 40 kHz to about 100 kHz, and a speed of 2 m/s to 4 m/s or from about 2 m/s to about 4 m/s. In another aspect, laser etching is carried out at 3.5 W or about 3.5 Watt power with a frequency of 40 kHz or about 40 kHz and a speed of 2 m/s or about 2 m/s.

In a further aspect, the LDS process may result in formation of a rough surface. The rough surface may entangle the copper plate with the polymer matrix in the thermoplastic composition providing adhesion between the copper plate and the thermoplastic composition.

The metallizing step can, in various aspects, be performed using conventional electroless or electrolytic plating techniques (e.g., using an electroless copper plating bath). In a still further aspect, the metallization can comprise the steps: a) cleaning the etched surface; b) additive build-up of tracks; and c) plating.

## Articles of Manufacture

Shaped, formed, or molded articles including the thermoplastic compositions are also provided. The thermoplastic compositions can be molded into useful shaped articles by a variety of means such as injection molding, extrusion, rotational molding, blow molding and thermoforming to form articles such as, for example, personal computers, notebook and portable computers, cell phone antennas and other such communications equipment, medical applications, radio frequency identifications (RFID) applications, automotive applications, and the like.

The blended thermoplastic compositions, or compounds, disclosed herein provide robust plating performance while maintaining good mechanical properties, for example, a notched Izod impact energy at 23 °C or at -20 °C as described elsewhere herein. Evaluation of the mechanical properties can be performed through various tests, such as Izod test, Charpy test, Gardner test, etc., according to several standards (e.g., ASTM D256). Unless specified to the contrary, all test standards described herein refer to the most recent standard in effect at the time of filing of this application.

In several aspects, the LDS compounds include a fixed loading amount of an LDS additive, such as copper chromium spinel, and varying amounts of thermoplastic base resins. In such aspects, fixed loading amounts of a stabilizer, an antioxidant, and a mold release agent were maintained in the LDS compounds.

In a further aspect, the molded article further comprises a conductive path formed by activation with a laser. In a yet further aspect, the article further comprises a metal layer plated onto the conductive path.

In various aspects, the thermoplastic composition may be used in the field of electronics. In a further aspect, non-limiting examples of fields which may use 3D MIDs, LDS process, or thermoplastic composition include electrical, electro-mechanical, Radio Frequency (RF) technology, telecommunication, automotive, aviation, medical, sensor, military, and security.

In one aspect, molded articles according to the present disclosure can be used to produce a device in one or more of the foregoing fields. Such devices which may use three dimensional (3D) molded interconnect devices (MIDs), LDS processes, or thermoplastic compositions according to the present disclosure include, for example, computer devices, household appliances, decoration devices, electromagnetic interference devices, printed circuits, Wi-Fi devices, Bluetooth devices, global positioning system (GPS) devices, cellular antenna devices, smart phone devices, automotive devices, military devices, aerospace devices, medical devices, such as hearing aids, sensor devices, security devices, shielding devices, radio frequency (RF) antenna devices, or RFID devices.

In a further aspect, the resulting disclosed compositions can be used to provide any desired shaped, formed, or molded articles. For example, the disclosed thermoplastic compositions may be molded into useful shaped articles by a variety of means such as injection molding, extrusion, rotational molding, blow molding and thermoforming. As noted above, the disclosed thermoplastic compositions are particularly well suited for use in the manufacture of electronic components and devices. As such, according to some aspects, the disclosed thermoplastic compositions can be used to form articles such as printed circuit board carriers, burn in test sockets, flex brackets for hard disk drives, and the like.

## ASPECTS

The present disclosure comprises at least the following aspects.

Aspect 1. A composition comprising: from about 25 wt. % to about 75 wt. % of a recycled polycarbonate; from about 15 wt. % to about 65 wt. % of at least one virgin polycarbonate; from about 1 wt. % to about 10 wt. % of a laser direct structuring additive; from about 0.01 wt. % to about 40 wt. % of a polycarbonate-polysiloxane copolymer; and from about 0.1 wt. % to about 2 wt. % of a silicone based additive; wherein the combined weight percent value of all components does not exceed 100 wt. %, and all weight percent values are based on the total weight of the composition, wherein the composition exhibits a notched Izod impact strength within about 10 percent of the notched Izod impact strength of a substantially similar composition comprising at least one virgin polycarbonate and in the absence of the recycled polycarbonate and the silicone based additive, and wherein the composition exhibits a plating index of greater than 0.8 when tested using X-ray fluorescence.

Aspect 2. The composition of aspect 1, further comprising from greater than 0 wt. % to about 10 wt. % of a phosphorus-containing flame retardant or from greater than 0 wt. % to about 1 wt. % Rimar-Salt based flame retardant.

Aspect 3. The composition of any of aspects 1-2, wherein the silicone based additive comprises a functionalized polydimethylsiloxane additive.

Aspect 4. The composition of any of aspects 1-2, wherein the silicone based additive comprises a hydroxy functionalized polydimethylsiloxane additive.

Aspect 5. Aspect 1. The composition of any one of aspects 1-4, wherein the laser direct structuring additive is a metal compound comprising heavy metal mixed oxide spinel, copper salt or combination thereof.

Aspect 6. The composition of any one of aspects 1-5, wherein the laser direct structuring additive comprises copper chromite black spinel.

Aspect 7. The composition of any one of aspects 1-6, wherein the virgin polycarbonate comprises a paracumyl

phenyl endcapped, bisphenol A derived polycarbonate.

Aspect 8. The composition of any one of aspects 1-7, wherein the recycled polycarbonate is sourced from a compact disc comprising a low molecular weight polycarbonate or from a water bottle comprising a branched polycarbonate.

Aspect 9. The composition of any one of aspects 1-8, wherein the composition further comprises one or more additional additives comprising an antioxidant, impact modifier, inorganic filler, or stabilizer, or a combination thereof.

Aspect 10. The composition of any one of aspects 1-9, wherein the composition further comprises talc.

Aspect 11. The composition of any one of aspects 1-10, wherein the polycarbonate-polysiloxane copolymer has a polysiloxane content of about 20 % by weight polysiloxane based upon the total weight of the polycarbonate-polysiloxane copolymer.

Aspect 12. An article comprising the composition of any one of aspects 1-11.

Aspect 13. The article of aspect 12, wherein the article comprises a metal replacement in a device.

Aspect 14. The article of any one of aspects 12-13, wherein the article comprises an automotive device, aircraft device, or a healthcare device.

Aspect 15. A method of forming a composition, the method comprising: combining: from about 25 wt. % to about 75 wt. % of a recycled polycarbonate; from about 65 wt. % to about 15 wt. % of at least one virgin polycarbonate; from about 1 wt. % to about 10 wt. % of a laser direct structuring additive; from about 0.01 wt. % to about of a polycarbonate-polysiloxane copolymer; and from about 0.1 to 2 wt. % of a silicone based additive; wherein the combined weight percent value of all components does not exceed 100 wt. %, and all weight percent values are based on the total weight of the composition.

Unless otherwise expressly stated, it is in no way intended that any method set forth herein be construed as necessarily requiring that its steps be performed in a specific order. Where a method claim does not specifically state in the claims or descriptions that the steps are to be limited to a specific order, it is no way intended that an order be inferred, in any respect.

All publications mentioned herein are incorporated herein by reference to, for example, describe the methods and/or materials in connection with which the publications are cited.

It is also to be understood that the terminology used herein is for the purpose of describing particular aspects only and is not intended to be limiting. As used in the specification and in the claims, the term "comprising" may include the aspects "consisting of" and "consisting essentially of." Unless defined otherwise, all technical and scientific terms used herein have the same meaning as commonly understood by one of ordinary skill in the art to which this disclosure belongs.

Unless otherwise specified, average molecular weights refer to weight average molecular weights ($M_w$) and percentages refer to weight percentages (wt. %) which, unless specifically stated to the contrary, are based on the total weight of the composition in which the component is included. In all cases, where combinations of ranges are provided for a given composition, the combined value of all components does not exceed 100 wt%.

Component materials to be used to prepare disclosed thermoplastic compositions of the disclosure as well as the thermoplastic compositions themselves to be used within methods are disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. This concept applies to all aspects of this application including, but not limited to, steps in methods of making and using the thermoplastic compositions of the disclosure.

References in the specification and concluding claims to parts by weight, of a particular element or component in a composition or article denotes the weight relationship between the element or component and any other elements or components in the composition or article for which a part by weight is expressed. Thus, in a composition containing 2 parts by weight of component X and 5 parts by weight component Y, X and Y are present at a weight ratio of 2:5, and are present in such ratio regardless of whether additional components are contained in the compound.

Compounds disclosed herein are described using standard nomenclature. For example, any position not substituted by any indicated group is understood to have its valency filled by a bond as indicated, or a hydrogen atom.

As used herein, the terms "number average molecular weight" or "Mn" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, *e.g.,* polycarbonate polymers, by methods well known to a person having ordinary skill in the art using

molecular weight standards, *e.g.,* polycarbonate standards or polystyrene standards, preferably certified or traceable molecular weight standards.

As used herein, the terms "weight average molecular weight" or "Mw" can be used interchangeably, and are defined by the formula:

$$M_w = \frac{\sum N_i M_i^{\ 2}}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, *e.g.* polycarbonate polymers, by methods well known to a person having ordinary skill in the art using molecular weight standards, e.g. polycarbonate standards or polystyrene standards, preferably certified or traceable molecular weight standards.

The terms "polycarbonate" or "polycarbonates" as used herein includes copolycarbonates, homopolycarbonates and (co)polyester carbonates.

As used herein, the term "recycled polycarbonate," or "recycled PC," or "recycled polycarbonate," or "post-consumer recycled PC" refers to a recycled polycarbonate that that is reclaimed from a post-consumer source.

In one aspect, "substantially free of" may refer to less than 0.5 wt. % or less than about 0.5 wt.% present in a given composition or component. In another aspect, substantially free of can be less than 0.1 wt. %, or less than about 0.1 wt.%. In another aspect, substantially free of can be less than 0.01 wt. %, or less than about 0.01 wt.%. In yet another aspect, substantially free of can be less than 100 parts per million (ppm), or less than about 100 ppm. In yet another aspect, substantially free can refer to an amount, if present at all, below a detectable level.

As used herein "capable of being plated" refers to a material wherein a substantially uniform metal plating layer can be plated on laser etched area. This process is different than laser marking wherein the main outcome of laser marking is a color change in the material under the effect of energy radiation. The key characterization for laser marking is the contrast between the mark and the substrate.

Plating index is defined as the ratio between average metal (copper) thickness obtained under one laser parameter of the tested sample and that of the reference sample. The reference sample was a polybutylene terephthalate (PBT) based composition for laser direct structuring (LDS) with commercial name of Pocan™ DP 7102. A plating index of over 0.7 is preferred.

## EXAMPLES

The following examples are put forth so as to provide those of ordinary skill in the art with a complete disclosure and description of how the methods, devices, and systems disclosed and claimed herein are made and evaluated, and are intended to be purely exemplary and are not intended to limit the disclosure. Best efforts have been made to ensure accuracy with respect to numbers (*e.g.,* amounts, temperature, etc.), but some errors and deviations should be accounted for. Unless indicated otherwise, weight percent, temperature is in degrees Celsius (°C) (ambient temperature unless specified otherwise), and pressure is at or near atmospheric.

Molded articles were prepared for analysis as described herein. Table 1 lists the materials from which PC based LDS compositions were prepared.

Table 1. Components.

| Item Description | Chemical Description | Source |
|---|---|---|
| **PC1** | Linear Bisphenol A Polycarbonate homopolymer, produced via interfacial polymerization, Mw of about 29,900 g/mol as determined by GPC using bisphenol A polycarbonate standards, p-cumylphenol end-capped | SABIC |
| **PC2** | Linear Bisphenol A Polycarbonate homopolymer, produced via interfacial polymerization, Mw of about 21,900 g/mol as determined by GPC using bisphenol A polycarbonate standards, p-cumylphenol end-capped | SABIC |

(continued)

| Item Description | Chemical Description | Source |
|---|---|---|
| **SiPC** | PDMS (polydimethylsiloxane) - Bisphenol A Polycarbonate copolymer, 20 wt. % siloxane, average PDMS block length of 45 units (D45), Mw about 30,000 g/mol as determined by GPC using bisphenol A polycarbonate standards, p-cumylphenol end-capped | SABIC |
| **AO1** | Anti-oxidant 168; phosphite stabilizer | BASF |
| **AO2** | Anti-oxidant 1010 | BASF |
| **UV** | 2-(2'hydroxy-5-t-octylphenyl)benzotriazole | Jingwei |
| | | |
| **TSAN** | SAN encapsulated PTFE - intermediate resin; anti-drip agent | SABIC |
| **PETS** | Pentaerythritol tetrastearate, PETS | FACL |
| **PPZ** | Fushimi FP-110; hexaphenoxycyclophosphazene flame retardant | Fushimi |
| **LDS** | Copper chromite black spinel; black 1G | Shepherd |
| **Silicone 1** | phenyl modified, hydroxy-terminated polydimethyl siloxane; Silicon additive 1 | Momentive |
| **Silicone 2** | Methylphenylsiloxane, methyl terminated; Silicon additive 2 | Momentive |
| **Silicone 3** | Polydiorganosiloxane; Silicon additive 3 | Momentive |
| **PCR 1** | Recycled PC (PCR) 1; derived from compact disc, | SABIC |
| **PCR 2** | Recycled PC (PCR) 2; derived from beverage bottle. | SABIC |

Samples were formed from pellets via compounding process runs on STC-S lab line (Toshiba TEM-37BS) using screw configuration of L-3-1B as in Fig.2. Recycled PC including water-bottle sourced and disc sourced were mixed and fed from throat separately. All the rest resin and additive were pre-mixed and fed from main throat using another feeder. The compounding and molding conditions used are shown in Table 2 and Table 3.

Table 2. Compounding conditions.

| Line NO.: STC-S Line<br>Screw: L-3-1B | | | | | Screw tip (mm): 72<br>Screw L (mm): 1517 | |
|---|---|---|---|---|---|---|
| | Output | Screw | Vacuum (Mpa) | Torque (%) | Barrel temp. °C | Die head Temp °C |
| Setting condition | 45 | 300 | -0.08 | 50-65 | 250-260 | 260 |

Table 3. Injection molding conditions.

| Molding parameters | Unit | Value |
|---|---|---|
| Pre-drying time | Hour | 4 |
| Pre-drying temp | °C | 120 |
| Hopper temp | °C | 50 |
| Zone 1 temp | °C | 270 |
| Zone 2 temp | °C | 270 |
| Zone 3 temp | °C | 270 |
| Nozzle temp | °C | 270 |
| Mold temp | °C | 120 |

Samples were tested according to the following standards.

Tensile was measured using ASTM D 638, under test speed of 5mm/min.

Impact tests were performed according to ASTM D256 and ASTM D4812, under room temperature, with Pendulum Energy 22.24 kg/$m^2$ (5 lbf/ft).

Flexural test measured using ASTM 790, under test speed of 1.27 mm/min, part thickness 3.2 mm.

Density was measured using the immersion method for solid plastics part according to ASTM D792.

Melt Volume Rate (MVR) was measured using granulate samples dried for 4 hours at 80°C, according to ASTM D1238.

Heat deflection temperature (HDT) was measured using ASTM D648, under stress 1.82 MPa or 0.45 MPa, part thickness 3.2 mm.

Mold Shrinkage was tested following internal method

Water absorption of plastics was tested by internal method, by dipping part in water room temperature (RT, 23 °C) for 48 h.

Dielectric Constant and Loss was tested by internal method using resonator chamber.

Table 4 presents the LDS composition formulations evaluated according to the tests above. Comparative sample C-1 was prepared from virgin polycarbonate and did not include the PCR polycarbonate or silicon additives. C-1 is the control formula, which represents PC LDS composition using virgin PC resins. EX-1 to EX-3 are the formula with 50%wt recycled PC. Illustrative samples EX-1, EX-2, and EX-3 included the PCR polycarbonate and differed according to the silicon additive present.

Table 4. PCR based LDS compositions.

| Item Description | C-1 | EX-1 | EX-2 | EX-3 |
|---|---|---|---|---|
| **PC 1** | 37.84 | 12.84 | 12.34 | 12.34 |
| **PC 2** | 37.83 | 12.83 | 12.33 | 12.33 |
| **SiPC** | 10 | 10 | 10 | 10 |
| **AO 1** | 0.06 | 0.06 | 0.06 | 0.06 |
| **AO 2** | 0.1 | 0.1 | 0.1 | 0.1 |
| **UV** | 0.12 | 0.12 | 0.12 | 0.12 |
| **TSAN** | 0.5 | 0.5 | 0.5 | 0.5 |
| **PETS** | 0.05 | 0.05 | 0.05 | 0.05 |
| **PPZ** | 4 | 4 | 4 | 4 |
| **LDS** | 6 | 6 | 6 | 6 |
| **Others** | 3.5 | 3.5 | 3.5 | 3.5 |
| **Silicon 1** | - | - | 1 | - |
| **Silicon 2** | - | - | - | 1 |
| **Recycled PC (PCR) 1** | - | 25 | 25 | 25 |
| **Recycled PC (PCR) 2** | - | 25 | 25 | 25 |

Table 5 presents the performance results of LDS composition C-1 and Ex1-Ex-3 described in Table 4. A comparison of C-1 and EX-1 demonstrates that the replacement of virgin PC with recycled PC reduced the impact performance (as represented by notch Izod impact) significantly from 790 J/m to 122 J/m. The result suggested that PCR based LDS compounds would be much more sensitive to notch than virgin PC based LDS compounds. Silicone-based additives such as functionalized PDMS as shown in EX-2 and EX-3 were introduced. EX-2 3 included PDMS with methyl end group (TSF437) and EX-3 2 included PDMS with hydroxyl end group (SF1023). Each formulation had the same loading of PDMS of 1%wt. Surprisingly, PDMS with hydroxyl end groups maintained the notch Izod impact strength of PCR LDS comparable to the notched Izod impact strength of the virgin PC LDS, (see EX-2). With sample EX-3, having the PDMS additive with methyl end groups, there was no improvement in the notch impact strength compared to EX-1. Although the mechanism behind this phenomenon is not immediately clear, it appears that hydroxyl end groups contribute to enhancing the notch impact of PCR LDS.

Table 5. Performance of PCR based LDS compositions.

| Testing Item | Unit | C-1 | EX-1 | EX-2 | EX-3 |
|---|---|---|---|---|---|
| **Ash** | % | 10.2 | 10.3 | 10.2 | 10.2 |
| **MVR (260, 5 kg)** | $cm^3$/10 min | 20 | 21 | 22 | 21 |
| **MV at 1000 s-1** | Pa·s | 122 | 120 | 114 | 115 |
| **Tensile Modulus** | MPa | 2560 | 2550 | 2600 | 2530 |
| **Tensile Strength at yield** | MPa | 58 | 59 | 57 | 59 |
| **Tensile Elongation at break** | % | 78 | 75 | 85 | 73 |
| **Notch Izod Impact** | J/m | 790 | 122 | 780 | 123 |
| **Unnotched Izod Impact** | J/m | NB | NB | NB | NB |
| **HDT (1.8 MPa)** | ° | 114 | 114 | 112 | 111 |
| **HDT (0.45 MPa)** | ° | 125 | 123 | 123 | 123 |
| **Dielectric Constant (1.9 GHz)** | / | 2.9 | 2.9 | 2.9 | 2.9 |
| **Dielectric Loss (1.9 Ghz)** | / | 0.006 | 0.006 | 0.006 | 0.006 |
| **UL 94 V0 at 0.75mm** | Normal | Pass | Pass | Pass | Pass |
| **UL 94 V0 at 0.75mm** | After aging | Pass | Pass | Pass | Pass |
| **Plating Index** | / | >0.8 | >0.8 | >0.8 | >0.8 |

Formulations were also prepared with a flame retardant additive, Rimar salt. Table 6 presents the formulations. Comparative sample C-1R and inventive sample EX-1-R both include a Rimar salt flame retardant additive, but differ in the presence of the -OH group functionalized silicon additive.

Table 6. Formulations with flame retardant additive.

| Item Description | C-1-R | EX-1-R |
|---|---|---|
| **PC 1** | 12.84 | 12.34 |
| **PC 2** | 12.83 | 12.33 |
| **SiPC** | 10 | 10 |
| **AO 1** | 0.06 | 0.06 |
| **AO 2** | 0.1 | 0.1 |
| **UV** | 0.12 | 0.12 |
| **TSAN** | 0.5 | 0.5 |
| **PETS** | 0.05 | 0.05 |
| **PPZ** | 0.06 | 0.06 |
| **LDS** | 6 | 6 |
| **Others additives** | 3.5 | 3.5 |
| **Silicone 1** | | 1 |
| **Recycled PC (PCR) 1** | 25 | 25 |
| **Recycled PC (PCR) 2** | 25 | 25 |

Table 7 presents performance of samples C-1-R and EX-1-R. Again, the hydroxyl functionalized PDMS additive contributed to maintaining the notched Izod impact strength of the PCR LDS composition.

Table 7. Performance of LDS compounds with Rimar salt FR additive.

| Testing Item | Unit | C-1-R | EX-1-R |
|---|---|---|---|
| **Ash** | % | 10.2 | 10.1 |
| **MVR (260, 5kg)** | $cm^3$/10 min | 13 | 16 |
| **MV at 1000 s-1** | Pa·s | 200 | 173 |
| **Tensile Modulus** | MPa | 2560 | 2550 |
| **Tensile Strength at yield** | MPa | 57 | 58 |
| **Tensile Elongation at break** | % | 69 | 73 |
| **Notch Izod Impact** | J/m | 155 | 748 |
| **Unnotched Izod Impact** | J/m | NB | NB |
| **HDT (1.8 MPa)** | °C | 122 | 121 |
| **HDT (0.45 MPa)** | °C | 132 | 131 |
| **Dielectric Constant (1.9 GHz)** | / | 2.9 | 2.9 |
| **Dielectric Loss (1.9 GHz)** | / | 0.006 | 0.006 |
| **UL 94 V0 at 1.5 mm** | Normal | Pass | Pass |
| **UL 94 V0 at 1.5 mm** | After aging | Pass | Pass |
| **Plating Index** | / | >0.8 | >0.8 |

It will be apparent to those skilled in the art that various modifications and variations can be made in the present disclosure without departing from the scope or spirit of the disclosure. Other aspects of the disclosure will be apparent to those skilled in the art from consideration of the specification and practice of the disclosure disclosed herein. It is intended that the specification and examples be considered as exemplary only, with a true scope and spirit of the disclosure being indicated by the following claims.

The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

**1.** A composition comprising:

from about 25 wt. % to about 75 wt. % of a recycled polycarbonate;
from about 15 wt. % to about 65 wt. % of at least one virgin polycarbonate;
from about 1 wt. % to about 10 wt. % of a laser direct structuring additive;
from about 0.01 wt. % to about 40 wt. % of a polycarbonate-polysiloxane copolymer; and
from about 0.1 wt. % to about 2 wt. % of a silicone based additive;
wherein the combined weight percent value of all components does not exceed 100 wt. %, and all weight percent values are based on the total weight of the composition,
wherein the composition exhibits a notched Izod impact strength within about 10 percent of the notched Izod impact strength of a substantially similar composition comprising at least one virgin polycarbonate and in the absence of the recycled polycarbonate and the silicone based additive, and
wherein the composition exhibits a plating index of greater than 0.8 when tested using X-ray fluorescence.

**2.** The composition of claim 1, further comprising from greater than 0 wt. % to about 10 wt. % of a phosphorus-containing flame retardant or from greater than 0 wt. % to about 1 wt. % Rimar-Salt based flame retardant.

**3.** The composition of any of claims 1-2, wherein the silicone based additive comprises a functionalized polydimethylsiloxane additive.

4. The composition of any of claims 1-2, wherein the silicone based additive comprises a hydroxy functionalized polydimethylsiloxane additive.

5. The composition of any one of claims 1-4, wherein the laser direct structuring additive is a metal compound comprising heavy metal mixed oxide spinel, copper salt or combination thereof.

6. The composition of any one of claims 1-5, wherein the laser direct structuring additive comprises copper chromite black spinel.

7. The composition of any one of claims 1-6, wherein the virgin polycarbonate comprises a paracumyl phenyl end-capped, bisphenol A derived polycarbonate.

8. The composition of any one of claims 1-7, wherein the recycled polycarbonate is sourced from a compact disc comprising a low molecular weight polycarbonate or from a water bottle comprising a branched polycarbonate.

9. The composition of any one of claims 1-8, wherein the composition further comprises one or more additional additives comprising an antioxidant, impact modifier, inorganic filler, or stabilizer, or a combination thereof.

10. The composition of any one of claims 1-9, wherein the composition further comprises talc.

11. The composition of any one of claims 1-10, wherein the polycarbonate-polysiloxane copolymer has a polysiloxane content of about 20 % by weight polysiloxane based upon the total weight of the polycarbonate-polysiloxane copolymer.

12. An article comprising the composition of any one of claims 1-11.

13. The article of claim 12, wherein the article comprises a metal replacement in a device.

14. The article of any one of claims 12-13, wherein the article comprises an automotive device, aircraft device, or a healthcare device.

15. A method of forming a composition, the method comprising:
combining:

from about 25 wt. % to about 75 wt. % of a recycled polycarbonate;
from about 65 wt. % to about 15 wt. % of at least one virgin polycarbonate;
from about 1 wt. % to about 10 wt. % of a laser direct structuring additive;
from about 0.01 wt. % to about of a polycarbonate-polysiloxane copolymer; and
from about 0.1 to 2 wt. % of a silicone based additive;
wherein the combined weight percent value of all components does not exceed 100 wt. %, and all weight percent values are based on the total weight of the composition.

Europäisches Patentamt
European Patent Office
Office européen des brevets

# EUROPEAN SEARCH REPORT

Application Number
EP 18 20 0491

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 107 033 575 A (WUXI YINGTONG NEW MATERIAL TECH CO LTD) 11 August 2017 (2017-08-11) * paragraph [0011] - paragraph [0025]; claims 9, 10; examples Comparative example 1, example 5, example 8; tables 1, 2 * ----- | 1-15 | INV. H01B3/42 C08L69/00 C08L83/10 C08L83/04 ADD. C08K3/22 C08K3/32 |
| Y | WO 2017/109591 A1 (SABIC GLOBAL TECHNOLOGIES BV [NL]) 29 June 2017 (2017-06-29) * paragraph [0094]; claim 13; examples SFR100, SF1023, Sample 11, sample 12; tables 2, 7 * ----- | 1-15 | |
| A | US 2014/194561 A1 (GANGULY ANIRBAN [IN] ET AL) 10 July 2014 (2014-07-10) * examples Sample 11, Sample 12; table 8 * ----- | 1-15 | |
| | | | TECHNICAL FIELDS SEARCHED (IPC) |
| | | | C08L C08K H01B |

The present search report has been drawn up for all claims

1

| Place of search | Date of completion of the search | Examiner |
|---|---|---|
| The Hague | 3 April 2019 | Enescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 20 0491

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2019

| Patent document cited in search report | Publication date | Patent family member(s) | Publication date |
| --- | --- | --- | --- |
| CN 107033575 A | 11-08-2017 | NONE | |
| WO 2017109591 A1 | 29-06-2017 | CN 108463507 A | 28-08-2018 |
| | | EP 3374432 A1 | 19-09-2018 |
| | | KR 20180093028 A | 20-08-2018 |
| | | US 2018362758 A1 | 20-12-2018 |
| | | WO 2017109591 A1 | 29-06-2017 |
| US 2014194561 A1 | 10-07-2014 | CN 105026494 A | 04-11-2015 |
| | | EP 2941457 A1 | 11-11-2015 |
| | | KR 20150104154 A | 14-09-2015 |
| | | US 2014194561 A1 | 10-07-2014 |
| | | WO 2014106831 A1 | 10-07-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7786246 B